# EUROPEAN PATENT APPLICATION

(11) **EP 4 628 976 A1**
(43) Date of publication of application: **08.10.2025**
(21) Application number: 23897112.1
(22) Date of filing: 04.07.2023
(51) Int. Cl.: G02C 13/00, G02C 7/06, G06Q 30/0601

(54) **EYEGLASS LENS DESIGNING METHOD, EYEGLASS LENS MANUFACTURING METHOD, ORDER PLACEMENT SYSTEM, ORDER RECEPTION SYSTEM, AND ORDER RECEPTION/PLACEMENT SYSTEM**

(30) Priority: 30.11.2022 JP 2022192335
(71) Applicant: Nikon-Essilor Co., Ltd., Tokyo 130-0026 (JP)
(72) Inventor: YOSHIDA, Yoshinori, Tokyo 130-0026 (JP); CHO, Sungjin, Tokyo 130-0026 (JP)
(74) Representative: Viering, Jentschura & Partner mbB Patent- und Rechtsanwälte
(86) International application number: PCT/JP2023/024842
(87) International publication number: WO 2024/116452

(57) **Abstract**

[Problem] To provide a spectacle lens suitable for each wearer.

[Means to Solve Problem] A first aspect of the present invention is a spectacle lens design method. The spectacle lens design method includes acquiring sensitivity information related to a wearer's sensitivity to character size. The spectacle lens design method includes designing a spectacle lens using the sensitivity information.

## Description

### Technical Field

The present invention relates to a spectacle lens design method, a spectacle lens manufacturing method, an ordering system, an order receiving system, and an order receiving/placing system.

### Background Art

A spectacle lens used for refractive correction of the eye is a simple optical system composed of a single lens, however, various developments are being made in many aspects to achieve spectacles that provide clear vision and a comfortable wearing experience (for example, see Patent Literature 1 and Patent Literature 2).

The invention disclosed in Patent Literature 1 relates to a method for selecting lens design criteria by selecting a basic design distribution and a progressive zone length of a progressive-addition lens pair. The invention disclosed in Patent Literature 1 enables the selection of more appropriate lens design criteria based on a group of basic design distributions that determine the distributions of the distance vision region and the near vision region, and the progressive zone length.

The invention disclosed in Patent Literature 2 relates to a spectacle lens ordering device, a spectacle lens providing system, a spectacle lens ordering program, a spectacle-lens-order receiving device, and a spectacle-lens-order receiving program. The invention disclosed in Patent Literature 2 enables the provision of spectacle lenses tailored to the individual needs of wearers regarding visual perception near the eye point.

### Citation List

### Patent Literature

[Patent Literature 1] International Publication No. 2009/133887
[Patent Literature 2] Japanese Unexamined Patent Application, First Publication No. 2014-085574

### Summary of Invention

A first aspect of the present invention is a spectacle lens design method. The spectacle lens design method includes acquiring sensitivity information related to a wearer's sensitivity to character size. The spectacle lens design method includes designing a spectacle lens using the sensitivity information.

A second aspect of the present invention is a spectacle lens manufacturing method. The spectacle lens manufacturing method includes manufacturing a spectacle lens according to design data designed using sensitivity information related to a wearer's sensitivity to character size.

A third aspect of the present invention is an ordering system for placing an order for a spectacle lens. The ordering system for spectacle lenses includes a sensitivity information acquirer that acquires sensitivity information related to a wearer's sensitivity to character size. The ordering system for spectacle lenses includes an order data transmitter that transmits order data including the sensitivity information acquired by the sensitivity information acquirer.

A fourth aspect of the present invention is an order receiving system for receiving orders for spectacle lenses. The order receiving system for spectacle lenses includes an order data receiver that receives order data including sensitivity information related to a wearer's sensitivity to character size. The order receiving system for spectacle lenses includes a spectacle lens designer that designs a spectacle lens using the sensitivity information included in the order data received by the order data receiver.

A fifth aspect of the present invention is an order receiving/placing system for receiving and placing orders for spectacle lenses. The order receiving/placing system for spectacle lenses includes an ordering system for spectacle lenses. The order receiving/placing system for spectacle lenses includes an order receiving system for spectacle lenses. The ordering system includes a sensitivity information acquirer that acquires sensitivity information related to a wearer's sensitivity to character size. The ordering system includes an order data transmitter that transmits order data including the sensitivity information acquired by the sensitivity information acquirer. The order receiving system includes an order data receiver that receives the order data. The order receiving system includes a spectacle lens designer that designs a spectacle lens using the sensitivity information included in the order data received by the order data receiver.

It should be noted that the above summary of the invention does not necessarily describe all necessary features of the present invention but that the invention may also reside in a sub-combination of the described features.

### Brief Description of the Drawings

Fig. 1 is a diagram showing an example of an order receiving/placing system 100.
Fig. 2 is a diagram showing an example of a tablet terminal 111.
Fig. 3 is a diagram showing an example of an ordering terminal 112.
Fig. 4 is a diagram showing an example of an order receiving server 121.
Fig. 5 is a diagram showing an example of a design terminal 122.
Fig. 6 is a diagram showing an example of a process for acquiring sensitivity information.
Fig. 7 is a diagram showing an example of characters displayed on a touch panel H4 of the tablet terminal 111.
Fig. 8 is a diagram showing an example of characters displayed on the touch panel H4 of the tablet terminal 111.
Fig. 9 is a diagram showing an example of characters displayed on the touch panel H4 of the tablet terminal 111.
Fig. 10 is a diagram showing an example of a process for ordering spectacle lenses.
Fig. 11 is a diagram showing an example of an order screen OS.
Fig. 12 is a diagram showing an example of a process for receiving an order for spectacle lenses.
Fig. 13 is a diagram showing an example of a process for designing spectacle lenses.
Fig. 14 is a diagram showing an example of an optimization process in designing spectacle lenses.
Fig. 15 is a diagram showing an example of an astigmatism region AR in a progressive-addition lens PAL optimized for a wearer who desires small characters.
Fig. 16 is a diagram showing an example of an astigmatism region AR in a progressive-addition lens PAL optimized for a wearer who desires large characters.
Fig. 17 is a diagram showing an example of an astigmatism region AR in a progressive-addition lens PAL optimized for a wearer who desires characters of a medium character size between the small characters shown in Fig. 15 and the large characters shown in Fig. 16.
Fig. 18 is a diagram showing an example of an astigmatism region AR in a single vision lens SVL optimized for a wearer who desires small characters.
Fig. 19 is a diagram showing an example of a power error region PE in the single vision lens SVL shown in Fig. 18.
Fig. 20 is a diagram showing an example of an astigmatism region AR in a single vision lens SVL optimized for a wearer who desires large characters.
Fig. 21 is a diagram showing an example of a power error region PE in the single vision lens SVL shown in Fig. 20.
Fig. 22 is a diagram showing an example of an astigmatism region AR in a single vision lens SVL optimized for a wearer who desires characters of a medium character size.
Fig. 23 is a diagram showing an example of a power error region PE in the single vision lens SVL shown in Fig. 22.

### Description of Embodiments

Hereinafter, the present invention will be described through an embodiment of the invention. However, the invention defined in the claims is not limited to the following embodiment, and not all combinations of features described in the embodiment are essential to the means by which the present invention solves the above problems.

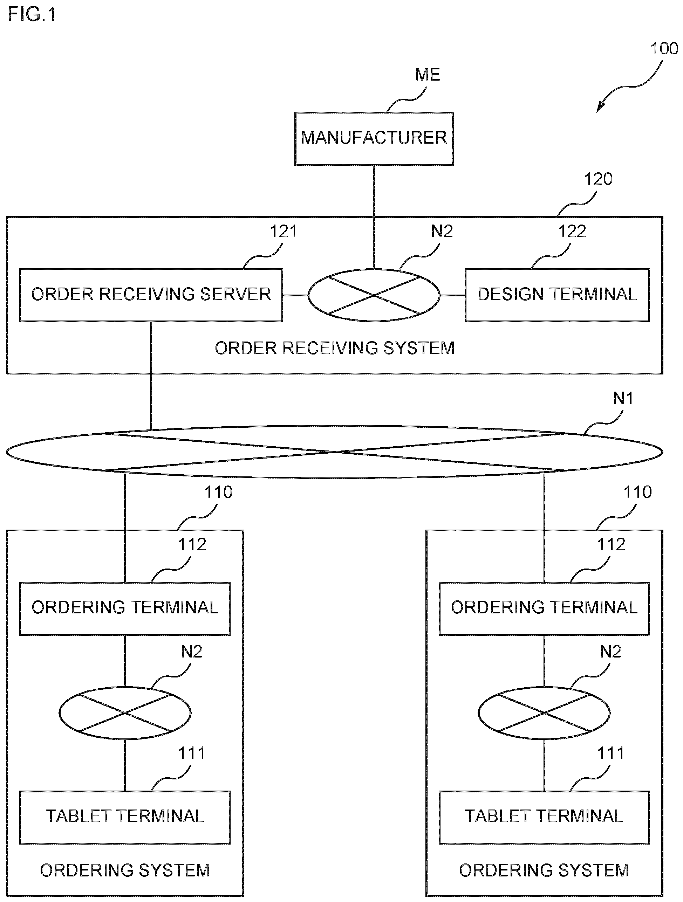

Fig. 1 is a diagram showing an example of an order receiving/placing system 100. The order receiving/placing system 100 is a system for receiving and placing orders for spectacle lenses. The order receiving/placing system 100 includes multiple ordering systems 110 and an order receiving system 120. A spectacle lens is an ophthalmic lens that is worn in front of the eye without contacting the eyeball.

An ophthalmic lens is a lens used for measurement, correction, or protection of the eye, or for altering appearance.

The ordering system 110 is a system for placing orders for spectacle lenses. The ordering system 110 is provided, for example, in a spectacle store. The ordering system 110 includes a tablet terminal 111 and an ordering terminal 112.

The order receiving system 120 is a system for receiving orders for spectacle lenses. The order receiving system 120 is provided, for example, in a spectacle lens manufacturing factory. The order receiving system 120 includes an order receiving server 121 and a design terminal 122.

The tablet terminal 111 is a type of computer in which one surface of a plate-shaped casing is a touch-operable liquid crystal display screen, and most operations are performed by touching the screen with a finger. The tablet terminal 111 is connected for communication with the ordering terminal 112 via a local area network N2. The local area network N2 is a network that connects computers, communication devices, information devices, and similar equipment within a limited range using cables, wireless signals, or the like, enabling mutual data communication. The tablet terminal 111 is an example of a display.

The tablet terminal 111 is used to measure the wearer's sensitivity to character size. The tablet terminal 111 displays characters on a touch panel H4 in a manner that allows selection of a character size, for example. For example, the staff of the spectacle store shows characters displayed on the tablet terminal 111 to the wearer, allowing the wearer to select a desired character size.

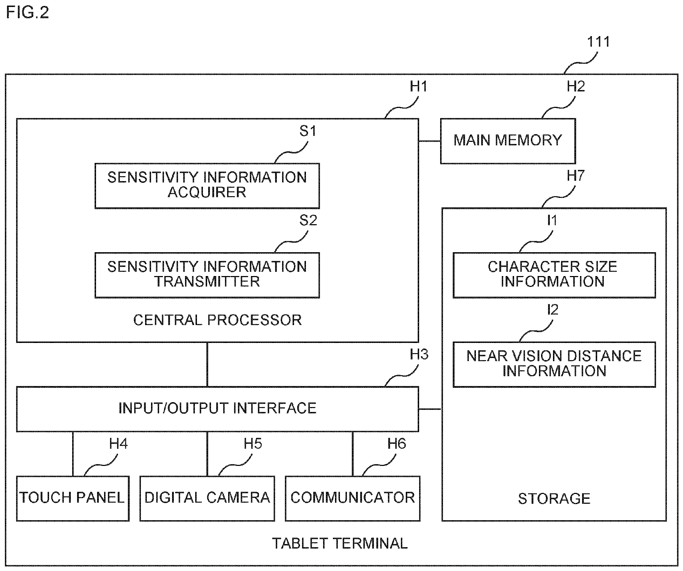

Fig. 2 is a diagram showing an example of the tablet terminal 111. The tablet terminal 111 includes a central processor H1, a main memory H2, an input/output interface H3, a touch panel H4, a communicator H6, and a storage H7.

The central processor H1 is a device that performs control of other devices and circuits, and operations such as data calculation. The main memory H2 is a memory storage device directly connected to the central processor H1 through electrical wiring or the like on a circuit board. The input/output interface H3 is a hardware interface for inputting and outputting signals between the computer main body and peripheral devices. The touch panel H4 is a device that performs input by touching the screen with a fingertip or a dedicated pen. The digital camera H5 is a device that receives light from the outside through a lens using a semiconductor element that reacts to light, converts the light into digital data, and records it on a memory storage medium. The communication device H6 is a device that transmits and receives electricity, radio waves, or light to communicate with other devices. The storage H7 is a memory storage device that permanently stores data.

The central processor H1 of the tablet terminal 111 functions as a sensitivity information acquirer S1 and a sensitivity information transmitter S2 by means of an installed program.

The sensitivity information acquirer S1 is a software module that acquires sensitivity information related to the wearer's sensitivity to character size.

The sensitivity information acquirer S1 acquires, for example, as the sensitivity information, character size information I1 that enables identification of a character size desired by the wearer when the wearer views characters at a near vision distance. The near vision distance refers to the working distance when an individual's habitual near-work plane serves as the target plane. The working distance is the distance from the reference plane to the target plane.

For example, the sensitivity information acquirer S1 acquires, as the sensitivity information, near vision distance information I2 that enables identification of the near vision distance desired by the wearer when the wearer views characters of a desired character size. The character size information I1 is an example of the first information. The near vision distance information I2 is an example of the second information.

As mentioned above, the tablet terminal 111 displays characters on the touch panel H4 in a manner that allows selection of a character size, for example. For example, the staff of the spectacle store shows characters displayed on the tablet terminal 111 to the wearer, allowing the wearer to select a desired character size. For example, the sensitivity information acquirer S1 acquires, as the character size information I1, information that enables identification of the desired character size selected by the wearer. For example, the sensitivity information acquirer S1 acquires, as the near vision distance information I2, information that enables identification of a near vision distance, with the touch panel H4 serving as the target plane when characters of a desired size selected by the wearer are displayed on the display.

The sensitivity information transmitter S2 is a software module that transmits sensitivity information including the character size information I1 and the near vision distance information I2 to the ordering terminal 112.

The storage H7 of the tablet terminal 111 stores the character size information I1 and the near vision distance information I2.

Returning to the description of Fig. 1, the ordering terminal 112 is a computer for placing orders for spectacle lenses. The ordering terminal 112 is connected for communication with the tablet terminal 111 via the local area network N2. The ordering terminal 112 is connected for communication with the order receiving server 121 via the Internet N1. The Internet N1 is a large-scale computer network that interconnects a vast number of computers and communication devices worldwide using a common communication specification.

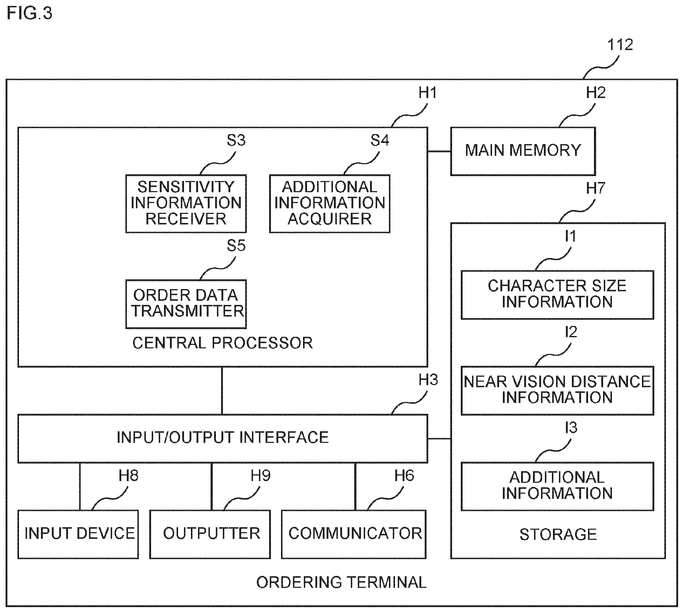

Fig. 3 is a diagram showing an example of the ordering terminal 112. As with the tablet terminal 111, the ordering terminal 112 includes a central processor H1, a main memory H2, an input/output interface H3, a communicator H6, and a storage H7. The ordering terminal 112 also includes an inputter H8 and an outputter H9.

The inputter H8 is a device for providing data, information, instructions, and so forth to a computer. The outputter H9 is a device that receives data from the computer and physically presents it to the outside in a human-recognizable manner.

The central processor H1 of the ordering terminal 112 functions as a sensitivity information receiver S3, an additional information acquirer S4, and an order data transmitter S5 by means of an installed program.

The sensitivity information receiver S3 is a software module that receives sensitivity information from the tablet terminal 111.

The additional information acquirer S4 is a software module that acquires additional information I3 other than the sensitivity information, among the information required for designing spectacle lenses. The additional information acquirer S4 acquires, as the additional information I3, for example, information obtained through an eye examination. The information obtained through an eye examination includes, for example, information on S power (spherical power), C power (cylindrical power), and axis (astigmatism axis angle). The information obtained through an eye examination includes, for example, information obtained through an interview, a visual acuity test, a preliminary test, an objective test, a subjective test, a binocular vision test, and a wearing test. The information obtained through a preliminary test includes, for example, information obtained through a cover test, a near point of convergence test, and a dominant eye test. The information obtained through an objective test includes, for example, information obtained through a corneal curvature test and a refraction test.

The order data transmitter S5 is a software module that transmits to the order receiving server 121 order data including the character size information I1, the near vision distance information I2, and the additional information I3.

The storage H7 of the ordering terminal 112 stores the character size information I1, the near vision distance information I2, and the additional information I3.

Returning to the description of Fig. 1, the order receiving server 121 is a computer for receiving orders for spectacle lenses. The order receiving server 121 is connected for communication with the ordering terminal 112 via the Internet N1. The order receiving server 121 is connected for communication with the design terminal 122 via the local area network N2.

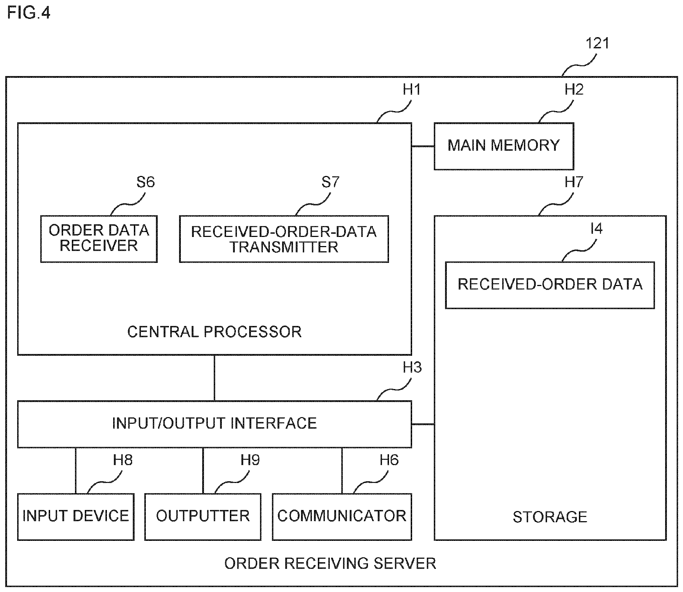

Fig. 4 is a diagram showing an example of the order receiving server 121. As with the ordering terminal 112, the order receiving server 121 includes a central processor H1, a main memory H2, an input/output interface H3, a communicator H6, a storage H7, an inputter H8, and an outputter H9.

The central processor H1 of the order receiving server 121 functions as an order data receiver S6 and a received-order-data transmitter S7 by means of an installed program.

The order data receiver S6 is a software module that receives order data from the ordering terminal 112.

The received-order-data transmitter S7 is a software module that transmits the order data received by the order data receiver S6 to the design terminal 122 as received-order data I4.

The storage H7 of the order receiving server 121 stores the received-order data I4.

Returning to the description of Fig. 1, the design terminal 122 is a computer for designing spectacle lenses. The design terminal 122 is connected for communication with the order receiving server 121 and a manufacturer ME via the local area network N2.

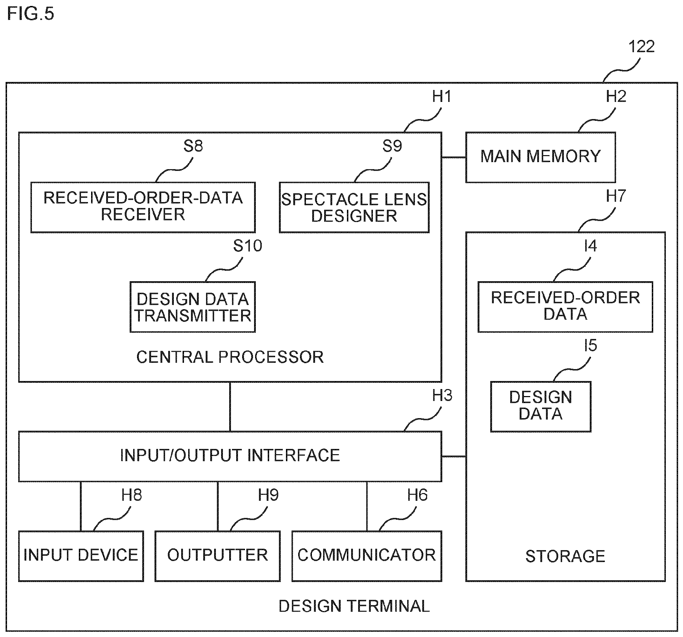

Fig. 5 is a diagram showing an example of the design terminal 122. As with the ordering terminal 112, the design terminal 122 includes a central processor H1, a main memory H2, an input/output interface H3, a communicator H6, a storage H7, an inputter H8, and an outputter H9.

The central processor H1 of the design terminal 122 functions as a received-order-data receiver S8, a spectacle lens designer S9, and a design data transmitter S10 by means of an installed program.

The received-order-data receiver S8 is a software module that receives the received-order data I4 from the order receiving server 121.

The spectacle lens designer S9 is a software module for designing spectacle lenses using the sensitivity information and the additional information I3. The spectacle lens designer S9 performs optimization according to a character size desired by the wearer and a near vision distance desired by the wearer, so as to form a distribution of astigmatism. Astigmatism arises due to a difference between the curvature radius of the distance portion and the curvature radius of the near portion of the lens surface. Astigmatism also arises due to oblique incidence on the lens surface. The distance portion is a portion of a multifocal lens or a progressive-addition lens PAL, which will be described later, that has a dioptric power for distance vision.

A multifocal lens is a spectacle lens designed to provide two or more optically separated focal refractive powers.

A progressive-addition lens PAL is a power-variation lens having two reference points for focal refractive power.

A reference point is a point on the front surface of a finished lens or on the finished surface of a lens blank to which the verification power for the corresponding region has been applied, as designated by the manufacturer.

The verification power is the dioptric power of a spectacle lens that is specifically calculated and provided by the manufacturer for verification using a lens meter. The verification power is the expected refractive power as the measured power when measured using a designated method, with a refractive power tolerance applied. The measured power is the dioptric power measured at a designated point on the spectacle lens using a designated method.

The verification power may differ from the ordered power. The verification power differs from the ordered power, for example, when the optical path used for measuring the refractive power with a lens meter is different from the optical path at the actual as-worn position, or due to physiological effects. The as-worn position refers to a position including the orientation of the spectacle lenses relative to the wearer's eyes and face when the spectacles are worn. The as-worn position must be measured while in the habitual head and body posture.

The ordered power refers to the dioptric power designated to the manufacturer when placing an order. The ordered power may differ from the prescribed power. The prescribed power is the dioptric power designated for correcting or compensating the wearer's vision, as determined through a refraction test.

A power-variation lens is designed so that the focal refractive power of a part or the entire spectacle lens smoothly changes without any discontinuities, providing one or more focal refractive powers. In general, a progressive-addition lens PAL is designed for presbyopia, providing both refractive correction and a clear field of view from distance to near. Presbyopia is a reduction in the ability to focus at near distances due to aging, under the condition that ametropia is corrected.

A progressive-addition lens PAL has a primary reference point, which serves as the distance reference point. The primary reference point is a point on the front surface of a power-variation lens where the verification power is applied for the primary intended use in the design of the spectacle lens. All power-variation lenses have a primary reference point. For example, the primary reference point of a progressive-addition lens PAL is the distance reference point.

The distance reference point is a point on the front surface of the spectacle lens where the verification power for the distance portion is applied to the lens. The distance reference point may differ from the distance design reference point in some cases. In a case where the verification power is not specified, the refractive power is either the nominal refractive power or the ordered power. The distance design reference point is a point on the front surface of a finished lens, or on the finished surface of a lens blank, at which the design specifications for the distance portion, as designated by the manufacturer, are applied.

A progressive-addition lens PAL has a secondary reference point, which serves as the near reference point. The secondary reference point is a point on the front surface of a power-variation lens where the verification power is applied for the secondary intended use in the design of the spectacle lens. For example, the secondary reference point of a progressive-addition lens PAL is the near reference point.

The near reference point is a point on the front surface of the spectacle lens where the verification power for the near portion is applied to the lens. The near reference point may differ from the near design reference point in some cases. In a case where the verification power is not specified, the refractive power is either the nominal refractive power or the ordered power. The near portion is a portion of a progressive-addition lens PAL that has a dioptric power for a near vision distance. The near design reference point is a point on the front surface of a finished lens, or on the finished surface of a lens blank, at which the design specifications for the near portion, as designated by the manufacturer, are applied.

The design data transmitter S10 is a software module that transmits to the manufacturer ME design data I5 including design information of the spectacle lens optimized by the spectacle lens designer S9.

Returning to the description of Fig. 1, the manufacturer ME is an device for manufacturing spectacle lenses. The manufacturer ME is connected for communication with the design terminal 122 via the local area network N2. The manufacturer ME manufactures spectacle lenses according to the design data I5.

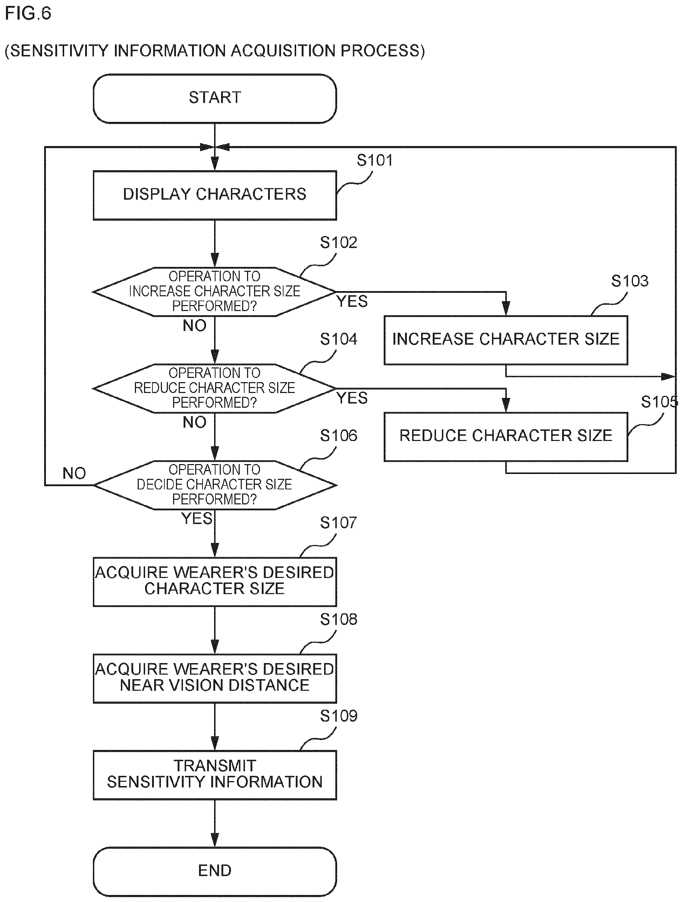

Fig. 6 is a diagram showing an example of a process for acquiring sensitivity information. The process shown in Fig. 6 will be described in detail as a process executed by the tablet terminal 111.

For example, when performing an eye examination of a wearer, the staff of the spectacle store has the wearer operate the tablet terminal 111 to acquire sensitivity information. The staff of the spectacle store has the wearer put on spectacles fitted with test lenses selected using a known method, and then has the wearer operate the tablet terminal 111.

The sensitivity information acquirer S1 of the tablet terminal 111 causes the touch panel H4 to display characters thereon (Step S101).

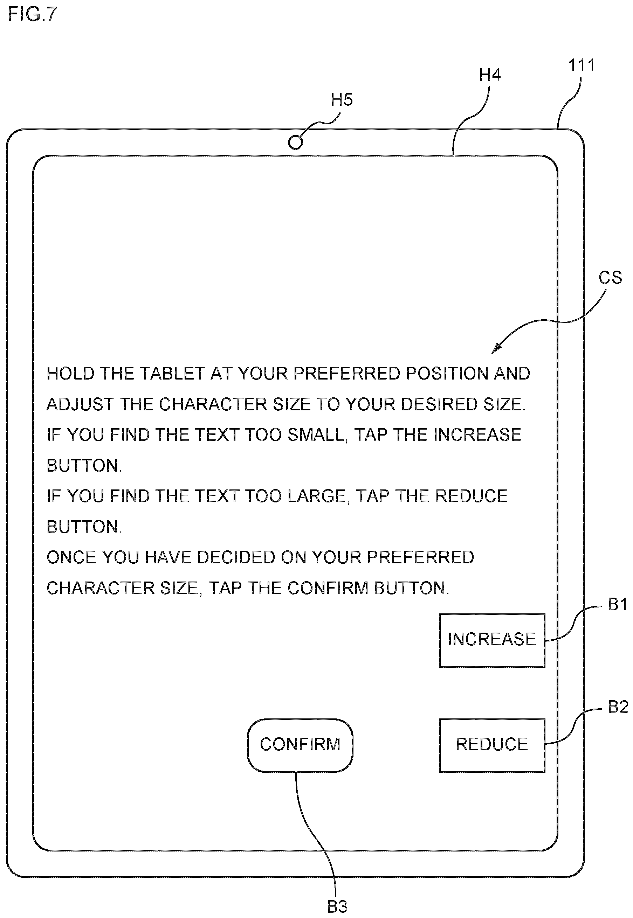

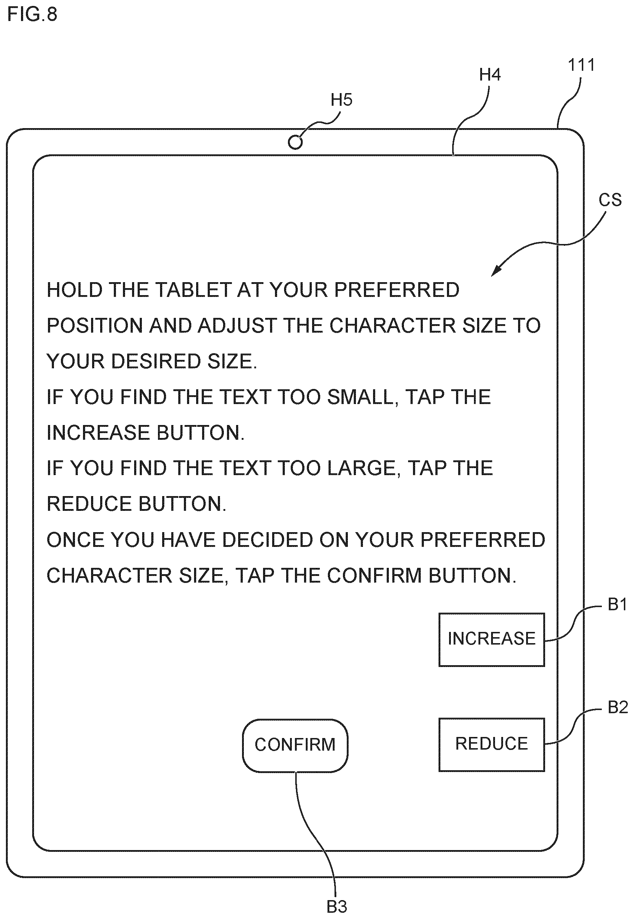

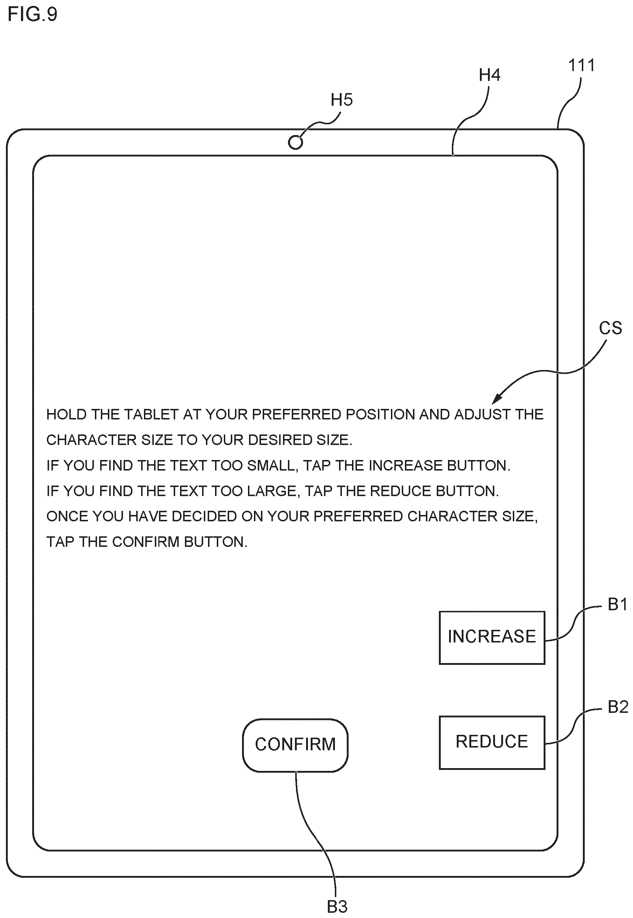

Fig. 7 through Fig. 9 are diagrams showing examples of characters displayed on the touch panel H4 of the tablet terminal 111. In each example shown in Fig. 7 through Fig. 9, a character sequence CS is displayed as example characters. The character size of the character sequence CS shown in Fig. 8 is larger than the character size of the character sequence CS shown in Fig. 7. The character size of the character sequence CS shown in Fig. 9 is smaller than the character size of the character sequence CS shown in Fig. 7.

In Step S101, the sensitivity information acquirer S1, for example, as shown in Fig 7 through Fig. 9, causes the touch panel H4 to display the character sequence CS along with an increase button B1, a reduce button B2, and a confirm button B3. The increase button B1 is a GUI (Graphical User Interface) for issuing an instruction to increase the character size of the character sequence CS. The reduce button B2 is a GUI for issuing an instruction to reduce the character size of the character sequence CS. The confirm button B3 is a GUI for issuing an instruction to decide the desired character size.

Upon initiating the process shown in Fig. 6 and first performing Step S101, the sensitivity information acquirer S1 displays, for example, the character sequence CS in a predetermined character size on the touch panel H4, as shown in Fig. 7.

The operator holds the tablet terminal 111 and performs an operation to increase or reduce the character size of the character sequence CS displayed on the touch panel H4 so that it reaches the desired character size. The operator adjusts the near vision distance to the touch panel H4 to match their desired near vision distance by either drawing the tablet terminal 111 closer to the eye by bending their arm or moving it further away from the eye by extending their arm.

The sensitivity information acquirer S1 determines whether an operation for increasing the character size has been performed (Step S102). In Step S102, the sensitivity information acquirer S1 determines whether the increase button B1 has been operated, for example. If the increase button B1 has been operated, the sensitivity information acquirer S1 determines an operation for increasing the character size as having been performed.

If the operation for increasing the character size has been performed (Step S102; YES), the sensitivity information acquirer S1 increases the character size (Step S103) and displays the characters on the touch panel H4 (Step S101). In Step S101, after the execution of the process in Step S103, it is sufficient that the character size of the displayed characters is larger than the character size of the characters displayed before the execution of the process in Step S103. For example, if the character sequence CS with the character size shown in Fig. 7 was displayed before executing the process in Step S103, the sensitivity information acquirer S1 displays the character sequence CS with an increased character size on the touch panel H4, as shown in Fig. 8.

The sensitivity information acquirer S1 determines whether an operation for reducing the character size has been performed (Step S104). In Step S104, the sensitivity information acquirer S1 determines whether the reduce button B2 has been operated, for example. If the reduce button B2 has been operated, the sensitivity information acquirer S1 determines an operation for reducing the character size as having been performed.

If the operation for reducing the character size has been performed (Step S104; YES), the sensitivity information acquirer S1 reduces the character size (Step S105) and displays the characters on the touch panel H4 (Step S101). In Step S101, after the execution of the process in Step S105, it is sufficient that the character size of the displayed characters is smaller than the character size of the characters displayed before the execution of the process in Step S105. For example, if the character sequence CS with the character size shown in Fig. 7 was displayed before executing the process in Step S105, the sensitivity information acquirer S1 displays the character sequence CS with a reduced character size on the touch panel H4, as shown in Fig. 9.

The sensitivity information acquirer S1 determines whether an operation for deciding the character size has been performed (Step S106). In Step S106, the sensitivity information acquirer S1 determines whether the confirm button B3 has been operated, for example. If the confirm button B3 has been operated, the sensitivity information acquirer S1 determines an operation for deciding the character size as having been performed.

The sensitivity information acquirer S1 repeatedly executes the processes from Step S101 to Step S106 until an operation for deciding the character size is performed (Step S106; NO → Step S101 → ...).

If the operation for deciding the character size has been performed (Step S106; YES), the sensitivity information acquirer S1 acquires information that enables identification of the character size desired by the wearer (Step S107). In Step S107, the sensitivity information acquirer S1 acquires information that enables identification of the character size of the characters displayed on the touch panel H4 when the operation for deciding the character size is performed, for example. The sensitivity information acquirer S1 acquires, as the information that enables identification of the character size, for example, information that enables identification of the apparent size of characters displayed on the touch panel H4. The sensitivity information acquirer S1 acquires, for example, the resolution of the touch panel H4 and the font size of the characters as information that enables identification of the apparent size of the characters. The resolution is the density of pixels that constitute the touch panel H4. A pixel is a minute colored dot that is the smallest unit constituting the touch panel H4. Upon acquiring the information that enables identification of the character size desired by the wearer, the sensitivity information acquirer S1 stores the information as character size information I1 in the storage H7.

The sensitivity information acquirer S1 also acquires information that enables identification of the near vision distance desired by the wearer (Step S108). As mentioned above, the near vision distance refers to the working distance with an individual's habitual near-work plane serving as the target plane. In Step S108, the sensitivity information acquirer S1, for example, treats the corneal apex or the anterior principal point of the ocular optical system as the wearer's eye position, and measures the near vision distance by considering the distance from the wearer's eye position to the touch panel H4 as the working distance. The wearer's eye position can be detected by employing a variety of known techniques. For example, the wearer's eye position can be detected using MediaPipe Iris provided by Google LLC. MediaPipe Iris is a machine learning model that detects eye key points from images. The wearer's eye position can also be detected using the TrueDepth camera provided by Apple Inc., for example. The TrueDepth camera is a three-dimensional sensing system implemented by multiple sensor modules and processor processing.

The staff of the spectacle store acquires the interpupillary distance of the wearer through an eye examination. The wearer's eye position can be determined even more accurately by using the interpupillary distance.

Upon acquiring the information that enables identification of the near vision distance desired by the wearer, the sensitivity information acquirer S1 stores the information as near vision distance information I2 in the storage H7.

The sensitivity information transmitter S2 of the tablet terminal 111 then transmits the sensitivity information to the ordering terminal 112 via the local area network N2 (Step S109). In Step S109, for example, the sensitivity information transmitter S2 causes the communicator H6 to transmit the sensitivity information including the character size information I1 and the near vision distance information I2.

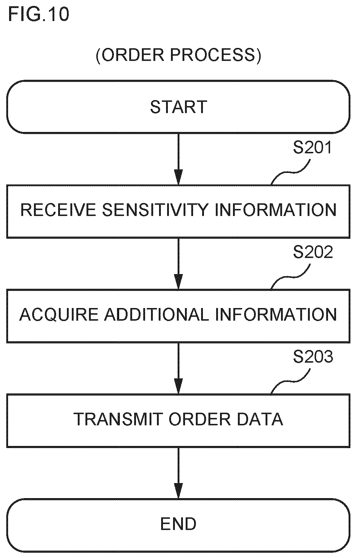

Fig. 10 is a diagram showing an example of a process for ordering spectacle lenses. The process shown in Fig. 10 will be described in detail as a process executed by the ordering terminal 112.

The sensitivity information receiver S3 of the ordering terminal 112 receives the sensitivity information transmitted from the tablet terminal 111 (Step S201). In Step S201, upon receiving the sensitivity information, for example, the sensitivity information receiver S3 stores the character size information I1 and the near vision distance information I2 included in the received sensitivity information in the storage H7.

The additional information acquirer S4 of the ordering terminal 112 acquires additional information I3 other than the sensitivity information (Step S202). In Step S202, the additional information acquirer S4 displays, for example, an order screen OS for inputting information necessary to order spectacle lenses, on the outputter H9 such as a display.

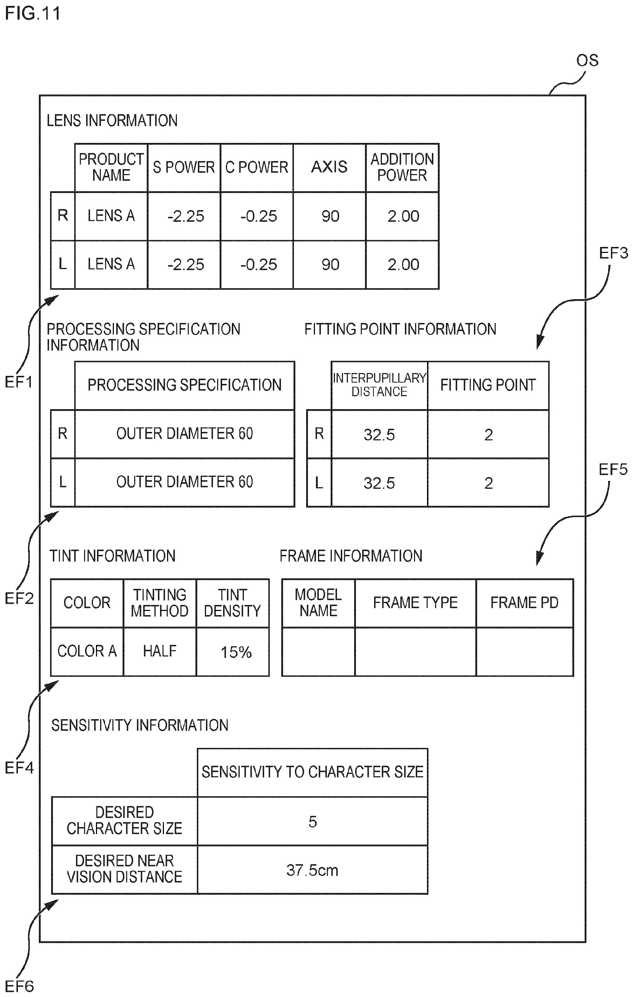

Fig. 11 is a diagram showing an example of the order screen OS. The order screen OS includes input forms for inputting multiple types of information. The input form is a region in which operation elements for writing content and operation elements for selecting one option from among choices are arranged.

The order screen OS includes, for example, a lens information input form EF1. The lens information input form EF1 is an input form for inputting information related to the spectacle lenses to be ordered. The lens information input form EF1 includes operation elements for inputting, for example, product names, S powers, C powers, axes, and addition powers.

The order screen OS includes, for example, a processing specification information input form EF2. The processing specification information input form EF2 is an input form for inputting information related to the outer diameter and arbitrary point thickness of the spectacle lenses to be ordered. The processing specification information input form EF2 includes operation elements for inputting, for example, processing specifications.

The order screen OS includes, for example, a fitting point information input form EF3. The fitting point information input form EF3 is an input form for inputting position information of the wearer's eyes. The fitting point information input form EF3 includes operation elements for inputting, for example, interpupillary distances and fitting points. A fitting point is a point on the front surface of a spectacle lens or a lens blank designated by the manufacturer in order to position the spectacle lenses in front of the eyes.

A lens blank is an optical material component that has one finished surface and is used to manufacture spectacle lenses. A lens-shaped optical material component that does not have a finished surface on either surface may be referred to as a rough blank. The optical material is a transparent material suitable for producing optical components.

The order screen OS includes, for example, a tint information input form EF4. The tint information input form EF4 is an input form for inputting information related to color lenses when the spectacle lenses to be ordered are color lenses (tinted lenses). The tint information input form EF4 includes operation elements for inputting, for example, color, tinting method, and tint density. Tinted lenses are spectacle lenses that have been specially tinted to impart cosmetic characteristics. Color lenses are generally referred to as absorptive lenses. Absorptive lenses are spectacle lenses designed to absorb incident light within a specific wavelength range or at a specific ratio.

The order screen OS includes, for example, a frame information input form EF5. The frame information input form EF5 is an input form for inputting information related to the spectacle frame desired by the wearer. The frame information input form EF5 includes operation elements for inputting, for example, model name, frame type, and so forth.

The order screen OS includes, for example, a sensitivity information input form EF6. The sensitivity information input form EF6 is an input form for inputting sensitivity information related to the wearer's sensitivity to character size. The sensitivity information input form EF6 includes, for example, operation elements for inputting the character size desired by the wearer and the near vision distance desired by the wearer. The desired character size and the near vision distance of the wearer can be automatically input from the sensitivity information received in Step S201. The desired character size information shown in Fig. 11 is a numerical value that indicates which of the predefined, distinct evaluation levels corresponds to the character size desired by the wearer. The desired near vision distance information shown in Fig. 11 is an actual measurement value that is obtained using the tablet terminal 111, indicating the near vision distance desired by the wearer.

Returning to the description of Fig. 10, in Step S202, when information other than sensitivity information is input via the order screen OS, the additional information acquirer S4 stores the input information other than sensitivity information as additional information I3 in the storage H7.

The order data transmitter S5 of the ordering terminal 112 then transmits order data to the order receiving server 121 via the Internet N1 (Step S203). In Step S203, the order data transmitter S5 causes the communicator H6 to transmit the order data including, for example, the character size information I1, the near vision distance information I2, and the additional information I3.

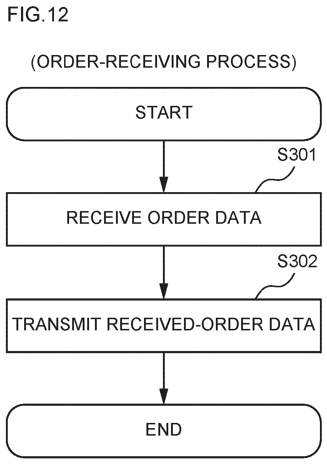

Fig. 12 is a diagram showing an example of a process for receiving an order for spectacle lenses. The process shown in Fig. 12 will be described as a process executed by the order receiving server 121.

The order data receiver S6 of the order receiving server 121 receives the order data transmitted from the ordering terminal 112 (Step S301). In Step S301, for example, upon receiving the order data, the order data receiver S6 stores the received order data in the storage H7 as received-order data I4.

The received-order-data transmitter S7 of the order receiving server 121 transmits the received-order data I4 to the design terminal 122 via the local area network N2 (Step S302). In Step S302, the received-order-data transmitter S7 causes the communicator H6 to transmit the received-order data I4.

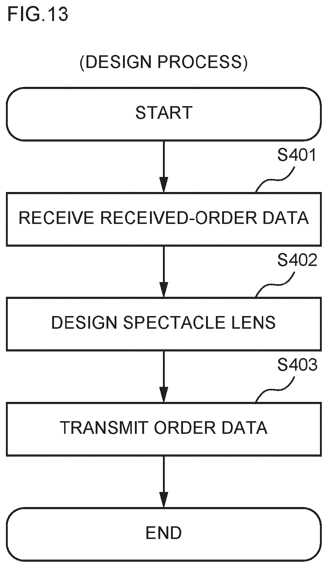

Fig. 13 is a diagram showing an example of a process for designing spectacle lenses. The process shown in Fig. 13 will be described as a process executed by the design terminal 122.

The received-order-data receiver S8 of the design terminal 122 receives the received-order data I4 transmitted from the order receiving server 121 (Step S401). In Step S401, for example, upon receiving the received-order data I4, the received-order-data receiver S8 stores the received-order data I4 in the storage H7.

Taking into account the wearer's sensitivity to characters, the spectacle lens manufacturer uses the design terminal 122 to design lenses suitable to the wearer.

The spectacle lens designer S9 of the design terminal 122 designs a spectacle lens (Step S402). In Step S402, the spectacle lens designer S9 designs a spectacle lens using, for example, the received-order data I4 stored in the storage H7. The spectacle lens designer S9, for example, uses as a starting point surface shape data of a lens that has been roughly designed by a person in advance, and automatically modifies the shape incrementally to obtain lens shape data with the desired performance. The spectacle lens designer S9, for example, applies a method referred to as optimization during the repeated execution of automatic modifications. For example, the spectacle lens designer S9 simulates visual perception using a CG (Computer Graphics) technology at each stage of modification and calculates performance values. The spectacle lens designer S9, for example, automatically modifies the shape so that the performance becomes optimal.

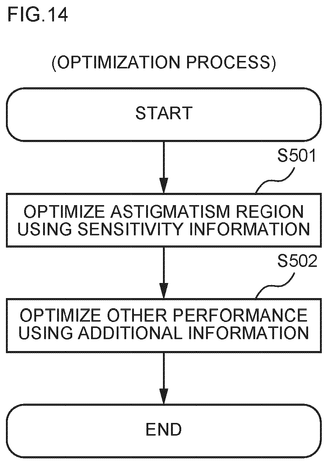

Fig. 14 is a diagram showing an example of the optimization process in designing spectacle lenses. The process shown in Fig. 14 will be described as a process executed by the design terminal 122.

In the optimization process, the spectacle lens designer S9 optimizes the distribution of astigmatism using sensitivity information (Step S501). In Step S501, for example, the spectacle lens designer S9 performs optimization according to the character size desired by the wearer and the near vision distance desired by the wearer, so as to form a distribution of astigmatism.

For example, the region of the spectacle lens necessary for reading characters becomes narrower as the character size decreases. However, smaller characters are prone to reduced readability when affected by astigmatism. Therefore, the spectacle lens designer S9 performs optimization so as to form an astigmatism distribution in which the region where astigmatism arises becomes narrower as the desired character size decreases. As a result of narrowing the region where astigmatism arises, the rate of change in astigmatism becomes steeper.

On the other hand, larger characters are likely to remain legible even when affected by astigmatism. However, the region of the spectacle lens necessary for reading characters broadens as the character size increases. Thus, the spectacle lens designer S9 optimizes the distribution of astigmatism so that the rate of change in astigmatism becomes more gradual as the character size desired by the wearer increases. The region in which astigmatism arises broadens as the rate of change in astigmatism becomes more gradual.

The region of the spectacle lens necessary for reading characters also broadens as the near vision distance shortens. Thus, the spectacle lens designer S9 performs optimization so that, for example, the clear vision range free from astigmatism becomes broader as the near vision distance desired by the wearer increases. The region in which astigmatism arises becomes narrower as the clear vision range broadens.

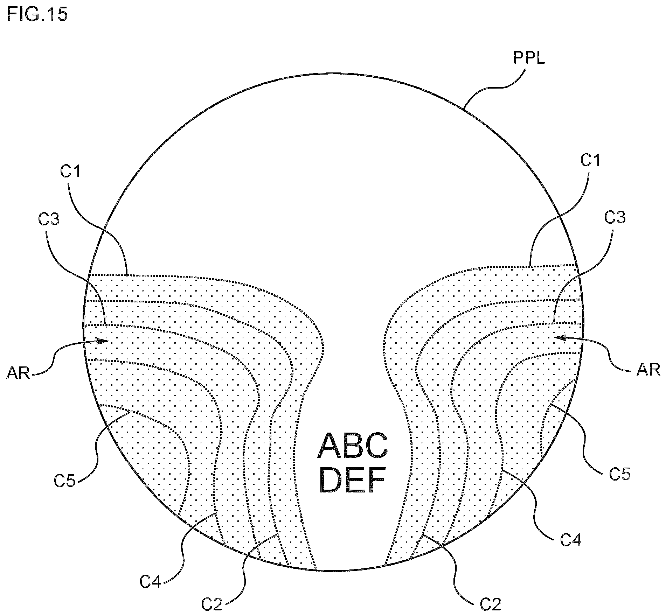

Fig. 15 through Fig. 17 are diagrams showing examples of a progressive-addition lens PAL optimized according to a character size desired by a wearer.

Fig. 15 is a diagram showing an example of an astigmatism region AR in a progressive-addition lens PAL optimized for a wearer who desires small characters. In a progressive-addition lens PAL, the astigmatism region AR exhibits increasing astigmatism in the sequence of the second contour line C2, the third contour line C3, and the fourth contour line C4, progressing from the first contour line C1 towards the fifth contour line C5. As described above, the region of the spectacle lens necessary for reading characters becomes narrower as the character size decreases. Smaller characters are more prone to reduced readability when affected by astigmatism. In the example shown in Fig. 15, the astigmatism region AR is formed so that the characters lie within the clear vision range, as the wearer desires small character size and the influence of astigmatism needs to be avoided. In the example shown in Fig. 15, the spectacle lens has a steep rate of change in astigmatism, however, it is designed such that the region necessary for reading characters is contained within the clear vision range and the characters are thus not affected by astigmatism.

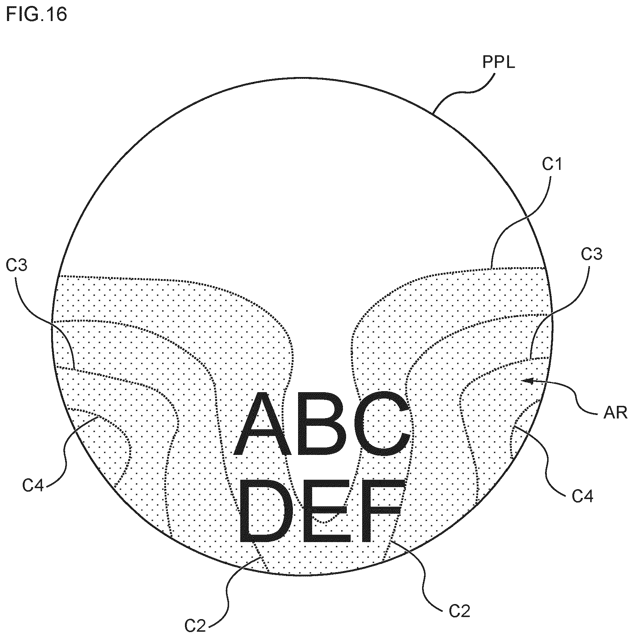

Fig. 16 is a diagram showing an example of an astigmatism region AR in a progressive-addition lens PAL optimized for a wearer who desires large characters. As described above, larger characters are likely to remain legible even when affected by astigmatism. The region of the spectacle lens necessary for reading characters broadens as the character size increases. In the example shown in Fig. 16, the astigmatism region AR is formed so that the characters lie within the third contour line C3, as the character size desired by the wearer is large, necessitating a broader region for reading characters. In the example shown in Fig. 16, the spectacle lens has a broad astigmatism region AR, however, it is designed such that the rate of change in astigmatism is gradual, and thus large characters are less likely to be affected by astigmatism.

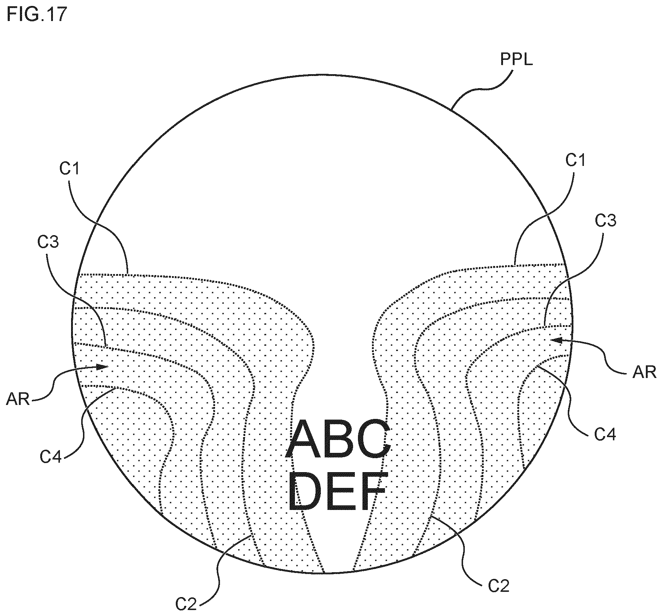

Fig. 17 is a diagram showing an example of an astigmatism region AR in a progressive-addition lens PAL optimized for a wearer who desires characters of a medium character size between the small characters shown in Fig. 15 and the large characters shown in Fig. 16. In the example shown in Fig. 17, the character size desired by the wearer is medium, and the astigmatism region AR is formed so that the characters lie within the second contour line C2. In the example shown in Fig. 17, the spectacle lens has a somewhat broad astigmatism region AR, however, it is designed such that the rate of change in astigmatism is somewhat gradual, and thus medium size characters are less likely to be affected by astigmatism.

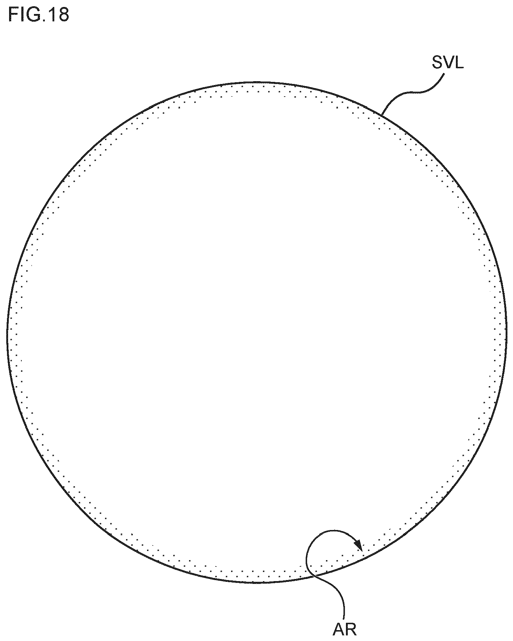

Fig. 18 through Fig. 23 are diagrams showing examples of a single vision lens SVL optimized according to a character size desired by a wearer. The single vision lens SVL is a spectacle lens designed to provide a single dioptric power.

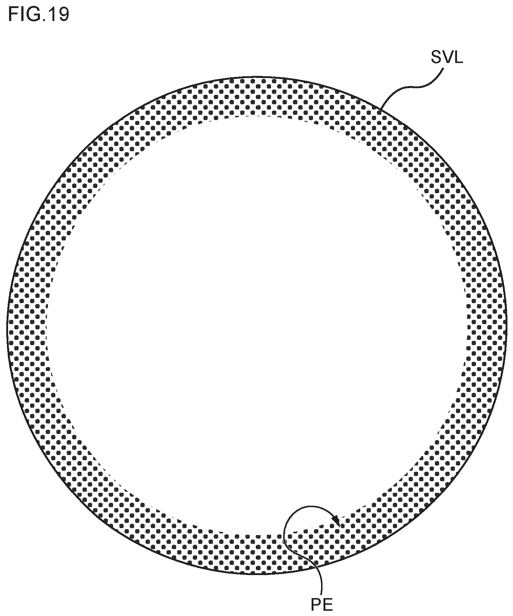

Fig. 18 is a diagram showing an example of an astigmatism region AR in the single vision lens SVL optimized for a wearer who desires small characters. Fig. 19 is a diagram showing an example of a power error region PE in the single vision lens SVL shown in Fig. 18. As described above, smaller characters are more prone to reduced readability when affected by astigmatism. The power error region PE of the single vision lens SVL broadens as the astigmatism region AR becomes narrower. However, the influence of power error can be compensated through eye accommodation or by adjusting the near vision distance. The examples shown in Fig. 18 and Fig. 19 are designed such that, since the wearer desires a small character size and avoiding the influence of astigmatism is prioritized, the power error region PE is made broader and the astigmatism region AR is made narrower.

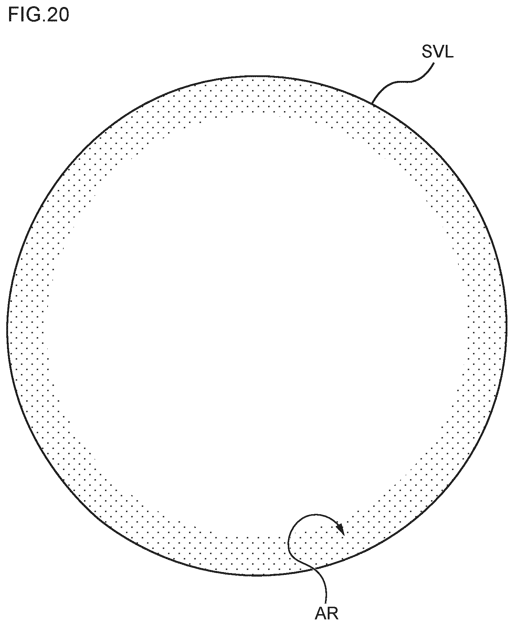

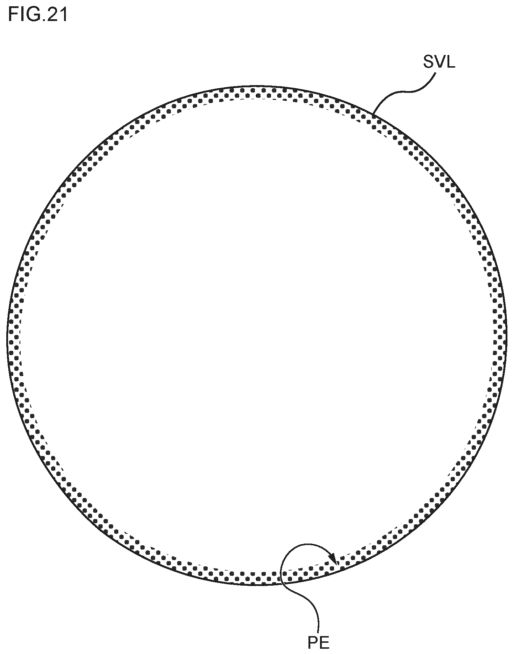

Fig. 20 is a diagram showing an example of an astigmatism region AR in a single vision lens SVL optimized for a wearer who desires large characters. Fig. 21 is a diagram showing an example of a power error region PE in the single vision lens SVL shown in Fig. 20. As described above, larger characters are likely to remain legible even when affected by astigmatism. The examples shown in Fig. 20 and Fig. 21 are designed such that, since the wearer desires a large character size and suppressing the influence of power error is prioritized, the power error region PE is made narrower and the astigmatism region AR is made broader.

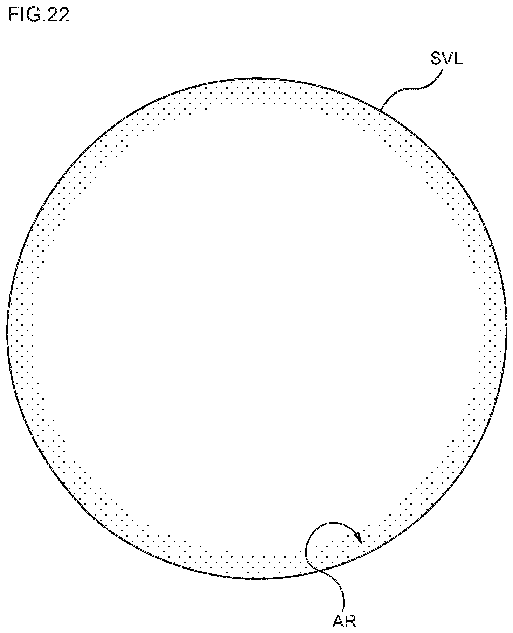

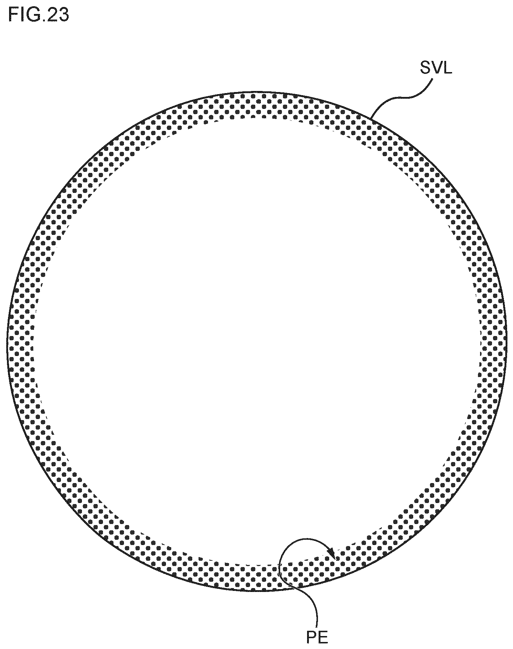

Fig. 22 is a diagram showing an example of an astigmatism region AR in a single vision lens SVL optimized for a wearer who desires characters of a medium character size. Fig. 23 is a diagram showing an example of a power error region PE in the single vision lens SVL shown in Fig. 22. In the examples shown in Fig. 22 and Fig. 23, the astigmatism region AR is formed such that since the wearer desires a medium character size, balancing the influence of astigmatism and the influence of power error is prioritized.

The present invention has been described through the above embodiment. However, the technical scope of the invention is not limited to the description of the above embodiment. It is apparent to those skilled in the art that various modifications or improvements can be added to the above embodiment. It is also apparent from the scope of claims that the present invention also encompasses one or more of such modifications or improvements. The contents of Japanese Patent Application No. 2022-192335 and all documents cited in the detailed description of the present invention are incorporated herein by reference to the extent permitted by law.

For example, the order receiving/placing system 100 described in the above embodiment includes multiple ordering systems 110. For example, the order receiving/placing system 100 is not limited to a configuration including multiple ordering systems 110. The order receiving/placing system 100 may be configured to include, for example, one ordering system 110.

For example, the order receiving/placing system 100 described in the above embodiment includes one order receiving system 120. However, the order receiving/placing system 100 is not limited to a configuration including one order receiving system 120. The order receiving/placing system 100 may be configured to include, for example, multiple order receiving systems 120.

For example, the ordering system 110 described in the above embodiment includes one ordering terminal 112. However, the ordering system 110 is not limited to a configuration including one ordering terminal 112. The ordering system 110 may be configured to include, for example, multiple ordering terminals 112.

For example, the ordering system 110 described in the above embodiment includes an ordering terminal 112. However, the ordering system 110 is not limited to a configuration including an ordering terminal 112. The ordering system 110 may be configured to include, for example, no ordering terminals 112. In the case where the ordering system 110 includes no ordering terminals 112, the tablet terminal 111 may include the same functions as those of the ordering terminal 112.

For example, the ordering system 110 described in the above embodiment includes one tablet terminal 111. However, the ordering system 110 is not limited to a configuration including one tablet terminal 111. The ordering system 110 may be configured to include, for example, multiple tablet terminals 111.

For example, the ordering system 110 described in the above embodiment includes a tablet terminal 111 serving as a display. However, the ordering system 110 may include a display and is not limited to a configuration including a tablet terminal 111. The ordering system 110 may, for example, include a mobile terminal such as a laptop or a smartphone, either as a replacement for or in conjunction with the tablet terminal 111. The ordering system 110 may, for example, include a desktop computer for stationary use on a desk and used in place of the tablet terminal 111 or in conjunction with the tablet terminal 111. When using a desktop computer, the wearer may either move their face closer to the display so that their eyes are nearer to the screen, or move their face away from the display so that their eyes are farther from the screen, in order to achieve the desired near vision distance.

For example, the order receiving system 120 described in the above embodiment includes one design terminal 122. However, the order receiving system 120 is not limited to a configuration including one design terminal 122. The order receiving system 120 may be configured to include, for example, multiple design terminals 122.

For example, the order receiving system 120 described in the above embodiment includes a design terminal 122. However, the order receiving system 120 is not limited to a configuration including a design terminal 122. The order receiving system 120 may, for example, include, either as a replacement for or in conjunction with the design terminal 122, a spectacle lens selection terminal that selects the spectacle lens optimal for the wearer from a variety of lens types. The spectacle lens selection terminal may, for example, store default design data for multiple predesigned spectacle lens patterns in the storage H7. The default design data may be set for multiple combinations of multiple patterns of character sizes that the wearer can specify and multiple patterns of near vision distances that the wearer can specify. The spectacle lens selection terminal may select the default design data optimal for the wearer based on a combination of first information that enables identification of the character size actually desired by the wearer and second information that enables identification of the near vision distance actually desired by the wearer. The order receiving system 120 that includes a spectacle lens selection terminal in place of the design terminal 122 can expedite the order processing by eliminating the time needed for lens design.

For example, the sensitivity information acquirer S1 described in the above embodiment displays a Japanese character sequence CS on the touch panel H4 to acquire information that enables identification of the character size desired by the wearer. However, when acquiring information that enables identification of the character size desired by the wearer, the sensitivity information acquirer S1 may display a character sequence CS in a language other than Japanese on the touch panel H4. When a character sequence CS in a language other than Japanese is displayed on the touch panel H4, the sensitivity information acquirer S1 may display a GUI for selecting the language of the character sequence CS.

For example, the desired character size information on the order screen OS described in the above embodiment is a numerical value that indicates which of the predefined, distinct evaluation levels corresponds to the character size desired by the wearer. However, the desired character size information is not limited to a numerical value indicating which evaluation level it corresponds to. As the desired character size information, for example, the actually measured value of the desired character size obtained using the tablet terminal 111 may be input.

For example, the desired near vision distance information on the order screen OS described in the above embodiment is an actually measured value obtained using the tablet terminal 111, concerning the near vision distance desired by the wearer. However, the information on the desired near vision distance is not limited to being input as an actually measured value. The desired near vision distance information may, for example, be a numerical value indicating which of the predefined, distinct evaluation levels corresponds to the near vision distance desired by the wearer.

When a reference is made to the execution order of the processes such as operations, procedures, and steps in the apparatus, the system, the program, and the method shown in the claims, specification, and drawings, wording such as "before" or "prior to" is not explicitly used. It should be noted that the execution order of the processes can be implemented in any sequence, provided that the output of a preceding process is not required as input for a subsequent one. In the claims, specification and drawings, a flow of operations may be described by using the terms such as "first" and "next" for the sake of convenience. This, however, does not necessarily mean that the operations should be performed in the described order.

### Description of Reference Signs

- 100:: Order receiving/placing system
- 110:: Ordering system
- 111:: Ordering terminal
- 112:: Tablet terminal
- 120:: Order receiving system
- 121:: Order receiving server
- 122:: Design terminal
- AR:: Astigmatism region
- B1:: Increase button
- B2:: Reduce button
- C1:: First contour line
- C2:: Second contour line
- C3:: Third contour line
- C4:: Fourth contour line
- C5:: Fifth contour line
- CS:: Character sequence
- EF1:: Lens information input form
- EF2:: Processing specification information input form
- EF3:: Fitting point information input form
- EF4:: Tint information input form
- EF5:: Frame information input form
- EF6:: Sensitivity information input form
- H1:: Central processor
- H2:: Main memory
- H3:: Input/output interface
- H4:: Touch panel
- H5:: Digital camera
- H6:: Communicator
- H7:: Storage
- H8:: Inputter
- H9:: Outputter
- I1:: Character size information
- I2:: Near vision distance information
- I3:: Additional information
- I4:: Received-order data
- I5:: Design data
- ME:: Manufacturer
- N1:: Internet
- N2:: Local area network
- OS:: Order screen
- PE:: Power error region
- PAL:: Progressive-addition lens
- S1:: Sensitivity information acquirer
- S2:: Sensitivity information transmitter
- S3:: Sensitivity information receiver
- S4:: Additional information acquirer
- S5:: Order data transmitter
- S6:: Order data receiver
- S7:: Received-order-data transmitter
- S8:: Received-order-data receiver
- S9:: Spectacle lens designer
- S10:: Design data transmitter

## Claims

1. A spectacle lens design method comprising
acquiring sensitivity information related to a wearer's sensitivity to character size, and
designing a spectacle lens using the sensitivity information.

2. The spectacle lens design method according to claim 1, comprising
acquiring, as the sensitivity information, first information that enables identification of a character size desired by a wearer when the wearer views characters at a near vision distance, and
acquiring, as the sensitivity information, second information that enables identification of a near vision distance desired by a wearer when the wearer views characters of a desired character size.

3. The spectacle lens design method according to claim 2, comprising
displaying characters on a display in a manner that allows selection of a character size, and
showing characters displayed on the display to a wearer and prompting the wearer to select a desired character size,
wherein information that enables identification of a desired character size selected by the wearer is acquired as the first information, and
wherein information that enables identification of a near vision distance, with a screen of the display serving as a target plane when characters of a desired size selected by the wearer are displayed on the display, is acquired as the second information.

4. The spectacle lens design method according to claim 2 or 3,
wherein, in designing a spectacle lens, optimization is performed according to a character size desired by the wearer and a near vision distance desired by the wearer, so as to form a distribution of astigmatism.

5. A spectacle lens manufacturing method comprising
manufacturing a spectacle lens according to design data designed using sensitivity information related to a wearer's sensitivity to character size.

6. An ordering system for placing an order for a spectacle lens, comprising
a sensitivity information acquirer that acquires sensitivity information related to a wearer's sensitivity to character size, and
an order data transmitter that transmits order data including the sensitivity information acquired by the sensitivity information acquirer.

7. An order receiving system for receiving orders for spectacle lenses, comprising
an order data receiver that receives order data including sensitivity information related to a wearer's sensitivity to character size, and
a spectacle lens designer that designs a spectacle lens using the sensitivity information included in the order data received by the order data receiver.

8. An order receiving/placing system for receiving and placing orders for spectacle lenses, comprising
an ordering system for spectacle lenses, and
an order receiving system for spectacle lenses,
wherein the ordering system includes
a sensitivity information acquirer that acquires sensitivity information related to a wearer's sensitivity to character size, and
an order data transmitter that transmits order data including the sensitivity information acquired by the sensitivity information acquirer, and
wherein the order receiving system includes
an order data receiver that receives the order data, and
a spectacle lens designer that designs a spectacle lens using the sensitivity information included in the order data received by the order data receiver.
